(19) Europäisches Patentamt
European Patent Office
Office européen des brevets

(11) **EP 1 827 609 B1**

(12) **FASCICULE DE BREVET EUROPEEN**

(45) Date de publication et mention de la délivrance du brevet:
**09.12.2020 Bulletin 2020/50**

(21) Numéro de dépôt: **05825504.3**

(22) Date de dépôt: **15.12.2005**

(51) Int Cl.:
*A62C 3/06* *(2006.01)*      *B01D 47/02* *(2006.01)*

(86) Numéro de dépôt international:
**PCT/FR2005/051091**

(87) Numéro de publication internationale:
**WO 2006/067348 (29.06.2006 Gazette 2006/26)**

(54) **DISPOSITIF DE LIMITATION DES CONSEQUENCES ULTIMES D'UN INCENDIE GENERALISE NON MAITRISE DANS UNE CELLULE D'ENTREPOSAGE DE MATIERES DANGEREUSES.**

VORRICHTUNG ZUR EINDÄMMUNG DER LETZTENDLICHEN FOLGEN EINES IM WESENTLICHEN AUSSER KONTROLLE GERATENEN BRANDS IN EINEM GEFAHRSTOFFLAGER

DEVICE FOR RESTRICTING THE ULTIMATE CONSEQUENCES OF ESSENTIALLY UNCONTROLLED FIRE IN A DANGEROUS MATERIAL STORE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.12.2004 FR 0453096**

(43) Date de publication de la demande:
**05.09.2007 Bulletin 2007/36**

(73) Titulaire: **Commissariat à l'Énergie Atomique et aux Énergies Alternatives**
**75015 Paris (FR)**

(72) Inventeurs:
• **NEUMANN, Matthieu**
  **13840 Rognes (FR)**
• **DELAFORGE, Thierry**
  **84120 Pertuis (FR)**
• **BOIS, Dominique**
  **04100 Manosque (FR)**

(74) Mandataire: **Ahner, Philippe et al**
**BREVALEX**
**95, rue d'Amsterdam**
**75378 Paris Cedex 8 (FR)**

(56) Documents cités:
EP-A- 0 714 701      BE-A- 411 217
FR-A1- 2 800 404      GB-A- 526 178
GB-A- 1 165 821      US-A- 4 859 405
US-A- 5 884 709      US-E1- R E26 020

EP 1 827 609 B1

Printed by Jouve, 75001 PARIS (FR)

## Description

## DOMAINE TECHNIQUE

La présente invention se rapporte au domaine des dispositifs de limitation des conséquences d'un incendie, qui garantissent la non propagation du feu. Plus particulièrement, elle concerne un dispositif adapté, en cas d'incendie, aux installations qui détiennent et confinent des matières dangereuses, telles que les matières nucléaires, les produits chimiques ou virologiques.

## ÉTAT DE LA TECHNIQUE ANTÉRIEURE

Un des enjeux majeurs des installations qui détiennent et confinent des matières dangereuses est de garantir l'absence de risque de leur transfert vers les êtres humains et vers l'environnement, les populations, et de manière plus particulière le personnel exploitant lesdites installations.

Les matières dangereuses sont conditionnées et placées dans un local étanche appelé cellule d'entreposage. Les exigences en matière de protection de l'environnement imposent de prendre en compte une éventuelle défaillance de l'étanchéité de la cellule d'entreposage. Il est usuel d'appliquer deux principes de protection supplémentaires, pour isoler les matières dangereuses du milieu naturel.

Un premier principe consiste à interposer plusieurs barrières statiques pour limiter les conséquences de la défaillance de l'une d'elle. La cellule d'entreposage est implantée à l'intérieur d'une enceinte de confinement, qui est elle-même isolée de l'extérieur. Cette enceinte de confinement joue un rôle de deuxième barrière de protection. L'étanchéité de la cellule d'entreposage et de l'enceinte de confinement est assurée par des cloisons étanches et par des portes étanches.

Un deuxième principe consiste à créer un système de confinement dynamique par la mise en oeuvre d'une ventilation mécanique, qui crée une cascade de dépression de l'extérieur de l'installation vers la cellule d'entreposage, afin de pallier les défauts d'étanchéité des barrières statiques. L'enceinte de confinement et la cellule d'entreposage ont chacune un système de ventilation indépendant composé d'un réseau de soufflage d'air provenant de l'extérieur et d'un réseau d'extraction de l'air vers l'extérieur. En plus du confinement par le maintien en dépression des locaux à risque, les systèmes de ventilation assurent des fonctions complémentaires comme le renouvellement (de l'ordre de quelques volumes/heure) et l'épuration de l'air, par des filtres d'épuration adaptés aux types de matières dangereuses. Ces fonctions contribuent à maintenir propre l'atmosphère de la cellule d'entreposage et de l'enceinte de confinement afin de limiter les risques de transfert des matières dangereuses vers l'environnement.

La détention de matières dangereuses nécessite donc la mise en œuvre d'une installation complète sans pouvoir se limiter à une barrière de protection unique. Si les deux principes de protection mentionnés ci-dessus sont considérés comme suffisants en fonctionnement normal, il est nécessaire de prendre en compte des situations accidentelles telles qu'un séisme et/ou un incendie. C'est en particulier le cas dans le domaine de l'entreposage de matières nucléaires, où des principes d'analyses et des règles de constructions sévères sont imposés par l'autorité de sûreté.

Dans certains cas, l'analyse du risque incendie conduit à prendre en compte un scénario enveloppe d'un incendie généralisé et non-maîtrisé dans un local sectorisé au feu, c'est-à-dire un local dont les cloisons sont qualifiées vis à vis de leur tenue au feu. Le développement d'un tel scénario peut conduire au dépassement des conditions de fonctionnement des dispositifs d'épuration, tels que les filtres d'épuration. Par exemple, dans le domaine du nucléaire les filtres très hautes efficacités les plus performantes sont qualifiés pour 200°C. La ventilation doit alors être arrêtée et isolée, par des clapets coupe feu, dont les plus performants dans le domaine du nucléaire sont qualifiés pour une tenue en pression de 2100 Pa. Cet isolement de la cellule d'entreposage, lorsqu'elle est en feu, conduit à une montée en pression susceptible de rompre le confinement statique, en l'absence de dispositions spécifiques complémentaires. Cette rupture pourrait conduire à des conséquences inacceptables pour l'environnement.

En effet l'analyse du risque incendie par les constituants indispensables au développement d'un feu, connus sous la dénomination de « triangle du feu » donnent les résultats suivants : les matières dangereuses et le matériel présents dans la cellule d'entreposage constituent le combustible ; l'air présent dans la cellule d'entreposage et l'air amené par le réseau de soufflage du système de ventilation de la cellule d'entreposage constituent le comburant. Dans cette approche seule l'énergie d'ignition manque au triangle du feu, pour déclencher le départ d'un incendie dans la cellule d'entreposage. Or les évolutions récentes de l'approche réglementaire de l'incendie pour les installations nucléaires de base imposent de postuler de façon déterministe l'ignition du feu. Tous les éléments sont donc réunis pour avoir à considérer le départ et le développement de l'incendie dans la cellule d'entreposage.

Par ailleurs, le caractère dangereux des matières détenues contraint, dans certains cas, les conditions d'intervention des pompiers dans la cellule d'entreposage et les possibilités de mise en œuvre de systèmes d'extinction à distance. L'impossibilité de garantir, dans ce contexte, la maîtrise rapide de l'incendie oblige à considérer la généralisation de l'incendie à toute la cellule d'entreposage.

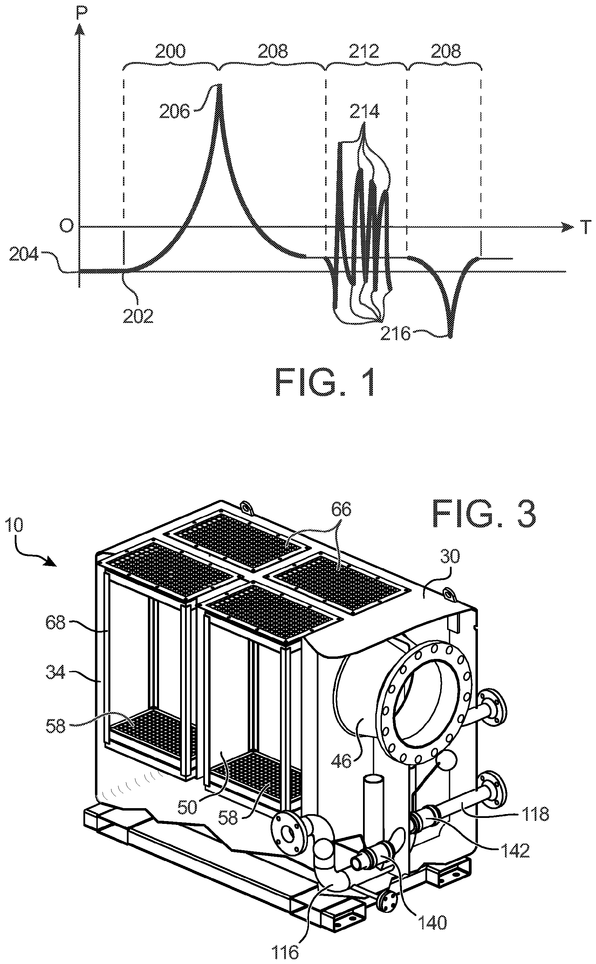

Enfin, la connaissance des incendies dans les milieux confinés a permis d'établir les trois phases successives du déroulement d'un incendie, qui apparaissant sur la courbe de la figure 1, qui est une courbe de pression théorique d'un incendie généralisé et non maîtrisé dans une cellule d'entreposage qui détient et confine des matières dangereuses, et sur laquelle l'axe des abscisses correspond au temps (T) et l'axe des ordonnées correspond à la pression (P).

La première phase, désignée par le repère 200 sur la figure 1, est une phase de développement de l'incendie. Cette première phase 200 correspond à une période durant laquelle le comburant est non limitant. En l'absence de système d'extinction dans la cellule d'entreposage, les conditions thermodynamiques que sont la pression et la température sont tributaires de l'évolution de l'incendie. A partir du moment de début de combustion 202, la pression P augmente d'une valeur négative de dépression initiale 204 jusqu'à un pic de surpression au maximum de la puissance du feu 206. Il est constaté qu'une augmentation importante et rapide de la température et de la pression dans la cellule d'entreposage, de l'ordre de plusieurs centaines de degré et de plusieurs dizaines de milliers de pascals, est de nature à remettre en cause l'intégrité du confinement statique de la cellule d'entreposage, ses dispositions d'isolement avec l'environnement, notamment des clapets coupe-feu et des filtres, ses dispositions de sectorisation au feu, notamment ses cloisons et ses portes étanches.

Les conditions extrêmes ci-dessus induisent un risque de dissémination des matières dangereuses vers l'enceinte de confinement et vers l'environnement, et de propagation de l'incendie au reste de l'installation. La fermeture automatique du réseau de soufflage de la cellule d'entreposage, dès la détection de l'incendie, permet de limiter le développement du feu dans la cellule d'entreposage car seul l'oxygène présent est consommé par l'incendie. L'incendie est alors limité par le comburant présent dans la cellule d'entreposage, et non plus par le combustible.

La deuxième phase, désignée par le repère 208 sur la figure 1, est une phase d'étouffement de l'incendie. Cette deuxième phase 208 correspond à une période durant laquelle la puissance du feu est limitée par manque de comburant. L'étouffement de l'incendie provoque une baisse de la température, et donc une forte diminution de la pression jusqu'à des valeurs négatives 216, de l'ordre de plusieurs milliers de pascals. Cette forte dépression dans la cellule d'entreposage peut également remettre en cause l'intégrité des structures déjà affaiblies par les conditions extrêmes de l'incendie. Lors de la phase d'étouffement 208, une fois que la pression dans la cellule d'entreposage est devenue négative, l'apport d'air par les dégradations des structures peut entraîner un risque de ré inflammation de l'incendie.

La troisième phase, désignée par le repère 212 sur la figure 1 est une phase de reprise de l'incendie. Du fait de l'apport de comburant décrit dans la deuxième phase 208, il peut se produire un phénomène de reprise de l'incendie dans la cellule d'entreposage. Il en découle alors de nouveaux cycles d'extinction et de ré inflammation entre des pics de surpression à la ré inflammation 214 et des pics de dépression à l'extinction 216, qui correspondent à des montées en pression et en température et donc à des relâchements possibles vers l'environnement. Cependant, les conditions thermodynamiques d'un nouveau cycle d'incendie sont moins extrêmes que lors de la première phase 200, car la quantité d'oxygène présent dans la cellule d'entreposage, provenant des dégradations provoquées par les phases précédentes, est moins importante que durant la première phase 200.

Même s'il s'agit d'un scénario hypothétique, puisque aucune source d'étincelle n'est présente dans la cellule d'entreposage, les conséquences d'un tel incendie ne seraient pas acceptables : rejet possible de matières dangereuses dans l'environnement, propagation possible du feu au reste de l'installation, contamination possible de l'environnement, des populations, et de manière plus particulière du personnel exploitant lesdites installations.

Il est donc nécessaire de mettre en place un dispositif qui limite le risque de transfert direct de la cellule d'entreposage vers le milieu extérieur à l'installation par la dégradation des dispositifs d'isolement de la cellule d'entreposage, et qui empêche toute propagation du feu de la cellule d'entreposage vers le reste de l'installation voire de l'environnement.

Un dispositif approprié à ces fonctions doit par ailleurs respecter un certain nombre de contraintes.

Tout d'abord, le dispositif doit être passif. En effet, les principes de conception en matière de sécurité imposent que son fonctionnement ne soit pas dépendant d'équipements (pompes, compresseurs, ventilateurs, actionneurs, systèmes de contrôle-commande...) de source d'énergie ou de capteurs susceptibles d'être eux-même l'objet d'une défaillance.

De plus, sa disponibilité de fonctionnement doit être garantie, car il intervient comme solution ultime et "intrinsèque" de sauvegarde passive, lorsque les dispositions usuelles de construction et d'exploitation (prévention, surveillance, détection, intervention) ont été épuisées.

Ensuite, le dispositif doit être capable d'assurer ses fonctions durant les phases 200, 208 et 212 de l'incendie.

Enfin, le dispositif ne doit pas apporter de risques de défaillance des confinements statiques et dynamiques de la cellule d'entreposage en fonctionnement normal de l'installation.

Un premier objectif auquel doit répondre le dispositif est d'empêcher le transfert de matières dangereuses vers le milieu extérieur à l'installation. A cette fin, il est nécessaire de remplir simultanément les conditions suivantes :

- garantir l'intégrité du confinement statique de l'enceinte de confinement, c'est-à-dire sa tenue en pression,

- garantir l'efficacité du système de ventilation de l'enceinte de confinement, c'est-à-dire son maintien en dépression et l'intégrité des filtres d'épuration,
- garantir, en cas d'incendie dans la cellule d'entreposage, l'intégrité du confinement statique de la cellule d'entreposage, en particulier au niveau des organes de confinement,
- limiter le transfert des aérosols vers l'extérieur de la cellule d'entreposage, et
- garantir l'efficacité du système de ventilation de l'enceinte de confinement, c'est-à-dire son maintien en dépression, et l'intégrité des filtres d'épuration.

Un deuxième objectif auquel doit répondre le dispositif est d'empêcher la propagation du feu de la cellule d'entreposage à l'enceinte de confinement et/ou au reste de l'installation. A cette fin, il est nécessaire de remplir simultanément les conditions suivantes :

- juguler les conditions de pressions générées dans la cellule d'entreposage à quelques milliers de Pascal en permettant un échappement et une admission des gaz, afin d'assurer l'intégrité des dispositions de sectorisation au feu de la cellule d'entreposage telles que les clapets coupe-feu et/ou les portes coupe-feu,
- canaliser et maîtriser l'échappement produit lors de la première phase de l'incendie, et
- abaisser la température de l'échappement jusqu'à une température inférieure à la température seuil de ré inflammation des imbrûlés.

Ces objectifs doivent être atteints, notamment pour des températures élevées, des valeurs de pression faibles (environ 2000 Pa), et des débits de gaz importants.

Un certain nombre de dispositifs existants permet de répondre partiellement aux fonctions et contraintes exposées précédemment. Tous ces dispositifs renferment de l'eau ou un liquide, qui permet, en situation de fonctionnement normal ou accidentel :

- de refroidir les gaz,
- de laver les gaz.

Ces dispositifs sont similaires à des barboteurs, et par extension s'assimilent à des dispositifs laveurs de gaz. Ils sont fondés sur le principe de bullage des gaz dans de l'eau dans l'objectif de les laver et pour les plus perfectionnés de diminuer leur température par échange thermique. La dimension des bulles formées dans ces dispositifs reste déterminante pour l'efficacité puisqu'elle conditionne la surface d'échange entre les gaz et le liquide. Ces dispositifs peuvent être classés en trois grandes familles.

La première famille de dispositifs laveurs de gaz englobe des dispositifs de base consistant à faire buller les gaz de combustion dans un bac d'eau comme dans le dispositif actif présenté dans le brevet US 5 395 408. Le bullage permet dans ce cas de refroidir les gaz et d'assurer l'extinction des cendres incandescentes. Ce dispositif s'apparente aux pare-étincelles. Par ailleurs, ces dispositifs s'avèrent peu performants pour les conditions thermodynamiques du scénario enveloppe de la présente demande de brevet. En effet, la taille des bulles de gaz dans l'eau n'étant pas maîtrisée, le dispositif doit être d'une taille démesurée pour avoir une surface d'échange suffisante au refroidissement des gaz et pour contenir un volume d'eau très important pour pallier à l'évaporation.

La deuxième famille de dispositifs laveurs de gaz est une version améliorée de la première famille. Comme pour le dispositif passif présenté dans le brevet US 4 859 405, elle consiste à faire buller des gaz à travers un lit de filtres poreux immergé dans un réservoir d'eau. Le filtre poreux a pour objectifs de piéger les particules véhiculées par les gaz, mais aussi de limiter la taille des bulles formées dans le lit poreux afin d'améliorer l'échange thermique entre les gaz et l'eau. Tout comme les dispositifs de la première famille, ce dispositif présente l'inconvénient de nécessiter, dès 500°C, de grandes quantités d'eau ou de liquide, pour compenser l'évaporation et pour assurer un échange thermique efficace. Par ailleurs, le passage des gaz dans le lit de filtre poreux, composé classiquement de sable ou de gravier, entraîne des pertes de charge très élevées. Ce dispositif ne s'avère pas satisfaisant, car la pression de déclenchement, située autour de 100 000 Pa, est d'environs de 2 ordres de grandeurs plus élevées que celle des applications visées dans la présente demande de brevet.

La troisième famille de dispositifs laveurs de gaz est aussi une version améliorée de la première famille de dispositifs laveurs de gaz. Elle consiste, comme présenté dans le brevet GB 526 178, à laver les gaz par passage et bullage de ces gaz dans deux chambres en intercommunication avant qu'ils ne soient évacués vers l'extérieur. La première chambre contient un liquide de lavage tel que de l'eau, et la seconde chambre, ayant une surface de passage égale à deux fois celle de la première, est composée de grilles percées par des ouvertures de faibles diamètres, typiquement 1 mm, immergées dans le liquide. Au-delà de ces pertes de charges élevées et de ces capacités d'échanges thermiques limitées, l'inconvénient de ce dispositif réside dans sa taille très importante, puisque dans les conditions thermodynamiques d'un incendie, une température d'environ 1000°C et un débit à traiter d'environ une fois le volume du local en une heure, il faudrait mettre en œuvre un équipement trop volumineux pour les contraintes des applications visées dans la présente demande de brevet.

Aucun des dispositifs laveurs de gaz divulgués dans ces brevets ne répond aux fonctions et contraintes fixées précédemment, pour une installation détenant des matières dangereuses, dans le cas du scénario enveloppe envisagé pour la présente invention.

En particulier, aucun de ces dispositifs n'est réellement passif dans le sens où le déclenchement du système ne se fait que, suite à la détection d'une augmentation de température ou de pression, par l'ouverture de vannes ou par la mise en marche d'aspiration des gaz vers le dispositif.

Par ailleurs, tous les dispositifs laveurs de gaz de l'art antérieur ne sont utilisables, dans le cas du scénario enveloppe envisagé, que pour l'échappement de gaz. Aucun de ces dispositifs n'a été conçu pour être réversible, c'est à dire, utilisable pour toutes les phases de montée en pression 200, les phases de dépression 208, et les cycles de pression 212, en assurant successivement :

- un échappement des gaz de la cellule d'entreposage en feu vers l'enceinte de confinement lors de la première phase 200 de développement de l'incendie et lors des cycles de pression 212,
- une admission d'air frais de l'enceinte de confinement vers la cellule d'entreposage lors de la deuxième phase 208 d'étouffement de l'incendie et lors des cycles de pression 212,
- une régulation, de manière mécanique et passive, des niveaux de liquide dans le dispositif.

Sont également connues de l'art antérieur les dispositifs décrits dans les documents EP 0714701 A, GB 1165821 A, US R E26020 E et US 5884709 A.

## EXPOSÉ DE L'INVENTION

Le but de la présente invention est de fournir un dispositif de limitation qui, dans l'hypothèse d'un incendie généralisé et non maîtrisé dans une cellule d'entreposage de matières dangereuses, empêche le risque de leur transfert au milieu extérieur à l'installation, qui garantit que le feu ne se propage pas de la cellule d'entreposage à l'enceinte de confinement, sans présenter les inconvénients des dispositifs de l'art antérieur, qui se déclenche pour de faibles pressions tout en étant capable d'évacuer des débits importants, qui soit passif, réversible et compact, et qui garantisse le confinement de la cellule d'entreposage en fonctionnement normal.

Ce but est atteint avec un dispositif de limitation de type « soupape hydraulique incendie», implanté dans l'enceinte et directement raccordé à la cellule.

L'invention concerne à cet effet une enceinte de confinement selon la revendication 1.

De préférence, les éléments de séparation sont au nombre de quatre pour chaque ouverture et chaque ouverture présente un contour rectangulaire.

Les éléments de séparation sont équipés de dispositifs casse vague formés par des plaques métalliques fixées sur des extrémités inférieures des éléments de séparations qui sont orientés vers l'intérieur de ladite au moins une chambre externe.

Le dispositif de limitation comporte en outre un dispositif de fractionnement de bulles associé à chaque chambre externe.

Chaque dispositif de fractionnement de bulles est constitué de couches superposées de fils entremaillés, qui sont séparées les unes des autres par des grilles de maintien.

Le dispositif de limitation comprend des entretoises interposées entre une grille de maintien du dispositif de fractionnement de bulles, qui est dite supérieure, et une grille de maintien, dite inférieure, d'un dispositif anti-éclaboussure.

Le dispositif de limitation est disposé dans l'enceinte de confinement, à l'extérieur de la cellule d'entreposage, et fixé à une cloison support qui est une cloison étanche constitutive de la cellule d'entreposage.

Le conduit de raccordement met en communication la cellule d'entreposage et la chambre interne en traversant la cloison support.

Le dispositif de limitation comporte une protection pare-feu. La protection pare-feu est formée de panneaux de plâtre, disposée autour du dispositif de limitation et fixée sur la cloison support.

Le système de régulation des niveaux de liquide comporte :

- un premier compartiment de régulation, qui communique avec le réservoir au-dessous de la surface libre du liquide et qui communique avec la cellule d'entreposage au-dessus de la surface libre du liquide de manière à être à la même pression que la cellule d'entreposage,
- un deuxième compartiment de régulation, qui communique avec le réservoir au-dessous de la surface libre du liquide et qui communique avec l'enceinte de confinement au-dessus de la surface libre du liquide de manière à être à la même pression que l'enceinte de confinement,

- une première vanne à flotteur, disposée dans le premier compartiment de régulation et fermée en fonctionnement normal, et
- une deuxième vanne à flotteur, disposée dans le deuxième compartiment de régulation et ouverte en fonctionnement normal,

et en ce que le réservoir est alimenté en liquide lorsque les deux vannes à flotteurs sont ouvertes simultanément.

Le premier compartiment de régulation comporte un orifice d'aération directement relié au conduit de raccordement, grâce auquel le premier compartiment de régulation est à la même pression que la cellule d'entreposage.

Le deuxième compartiment de régulation comporte un évent directement relié à l'enceinte de confinement, grâce auquel le deuxième compartiment de régulation est à la même pression que l'enceinte de confinement.

Le système de régulation des niveaux de liquide comporte en outre une vanne de secours destinée à un pilotage manuel dudit système.

Chaque compartiment de régulation comporte un trop-plein muni d'un siphon, permettant d'évacuer le liquide vers un réservoir de récupération.

Le dispositif de limitation comporte en outre une réserve de liquide, un tuyau de remplissage alimentant le réservoir à partir de la réserve, et un tuyau de vidange.

De préférence, tous ses éléments constitutifs sont en acier inoxydable afin d'éviter la corrosion.

De préférence, le liquide contenu dans le réservoir est de l'eau.

## BRÈVE DESCRIPTION DES DESSINS

L'invention sera mieux comprise à la lecture de la description détaillée qui va suivre de modes de réalisation de l'invention, fournis à titre illustratif et nullement limitatif, en référence aux dessins annexés, dans lesquels :

- la figure 1, déjà décrite, représente la courbe de pression théorique d'un incendie généralisé et non maîtrisé dans une cellule d'entreposage contenant des matières dangereuses ;
- la figure 2 est une coupe longitudinale en élévation qui illustre l'implantation, dans une enceinte de confinement, d'un dispositif de limitation raccordé à une cellule d'entreposage ;
- la figure 3 est une vue du dispositif de limitation, en perspective et en coupe ;
- la figure 4 est une vue du dispositif de limitation, en coupe longitudinale en élévation ;
- la figure 5 est une vue du dispositif de limitation, en coupe selon la ligne 5-5 de la figure 4 ;
- la figure 6 est une vue de dessus du dispositif de limitation, la protection pare-feu étant omise ;
- la figure 7 représente une vue partielle, en coupe en élévation, d'une chambre externe du dispositif de limitation ;
- la figure 8 représente le dispositif de limitation en coupe transversale en élévation, et illustre le système de régulation des niveaux de liquide dans le dispositif de limitation ;
- les figures 9 et 10 représentent respectivement le système de régulation des niveaux de liquide et le dispositif de limitation lors de la phase d'équilibre de son cycle de fonctionnement ;
- les figures 11 et 12 représentent respectivement le système de régulation des niveaux de liquide et le dispositif de limitation lors de la phase d'échappement de son cycle de fonctionnement ;
- les figures 13 et 14 représentent respectivement le système de régulation des niveaux de liquide et le dispositif de limitation lors de la phase d'admission de son cycle de fonctionnement ; et
- la figure 15 est une vue en coupe transversale du dispositif de limitation, illustrant une variante dans laquelle les siphons sont intégrés au carter.

## EXPOSÉ DÉTAILLÉ DE MODES DE RÉALISATION PARTICULIERS

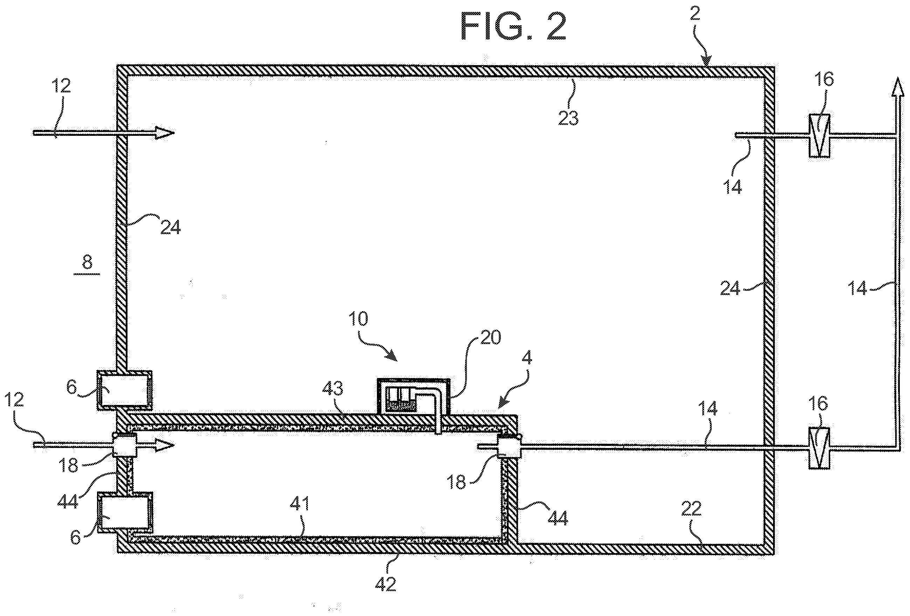

En se référant tout d'abord à la figure 2, il est représenté de façon schématique une implantation d'un dispositif de limitation 10 conforme à l'invention dans une installation d'entreposage de matières dangereuses, comme par exemple des déchets nucléaires. La figure 2 montre, en coupe longitudinale en élévation, l'installation d'entreposage, qui comporte une enceinte de confinement 2 dans laquelle est incluse une cellule d'entreposage 4. Les matières dangereuses sont entreposées dans la cellule d'entreposage 4.

Le volume de l'enceinte de confinement 2 est sensiblement égal à cinq fois le volume de la cellule d'entreposage 4. Ce rapport des volumes, conjugué au débit de ventilation de l'enceinte de confinement 2, permet de diluer les gaz qui pourraient être transférés de la cellule d'entreposage 4 vers l'enceinte de confinement 2.

L'enceinte de confinement 2 comporte une cloison inférieure 22, une cloison supérieure 23, et des cloisons latérales 24. La cellule d'entreposage 4 est disposée à l'intérieur de l'enceinte de confinement 2, sur la cloison inférieure 22 de l'enceinte de confinement 2. La cellule d'entreposage 4 comporte une cloison inférieure 42 qui est confondue avec la cloison inférieure 22 de l'enceinte de confinement 2. Elle comporte également une cloison supérieure 43 et des cloisons latérales 44. Sur le mode de réalisation illustré aux figures, l'enceinte de confinement 2 et la cellule d'entreposage 4 possèdent deux cloisons latérales communes. La hauteur de la cellule d'entreposage 4 est inférieure à la hauteur de l'enceinte de confinement 2. Les cloisons 42, 43, 44 de la cellule d'entreposage 4 sont réalisées en béton. Elles sont recouvertes, à l'intérieur de la cellule d'entreposage 4, d'un revêtement de sectorisation au feu réalisé en plâtre et/ou en béton.

La cloison inférieure 22 de l'enceinte de confinement 2 est réalisée en béton. Les cloisons supérieure 23 et latérales 24 de l'enceinte de confinement 2 sont réalisées en métal. Une peau métallique en acier d'une épaisseur de 5 mm est soudée en continue sur une charpente métallique.

Toutes les cloisons 22, 23, 24, 42, 43, 44 sont étanches aux liquides et aux gaz.

Des sas 6, étanches, permettent l'accès du personnel d'exploitation à l'enceinte de confinement 2 et à la cellule d'entreposage 4 depuis l'extérieur 8 sans rupture du confinement.

L'enceinte de confinement 2 et la cellule d'entreposage 4 sont toutes deux dotées d'un système de ventilation. Ces systèmes de ventilation comportent chacun un réseau de soufflage 12 d'air provenant de l'extérieur 8, un réseau d'extraction 14 d'air vers l'extérieur 8, et un filtre d'épuration d'air 16. De préférence, les systèmes de ventilation ont un taux de renouvellement de 2 Volumes/h, afin d'assurer le renouvellement et l'épuration de l'air, ainsi que le confinement dynamique dans l'enceinte de confinement 2 et dans la cellule d'entreposage 4. Le système de ventilation de la cellule d'entreposage 4 comporte également des clapets coupe-feu 18 implantés sur les conduits de soufflage et d'extraction du réseau de ventilation afin d'assurer la continuité de la sectorisation au feu.

Le dispositif de limitation 10 est installé à l'intérieur de l'enceinte de confinement 2 et à l'extérieur de la cellule d'entreposage 4. Il est fixé sur une cloison support, qui est la cloison supérieure 43 de la cellule d'entreposage 4.

Bien entendu, plusieurs dispositifs de limitation selon l'invention peuvent être associés en parallèle afin d'augmenter la capacité de traitement.

Le dispositif de limitation 10 va maintenant être décrit, en référence aux figures 3 à 7. Les différents éléments constitutifs du dispositif de limitation 10, qui vont être décrits ci-après, sont de préférence réalisés en acier inoxydable afin d'éviter leur corrosion.

Le dispositif de limitation 10 comporte un réservoir 28, qui contient un liquide non inflammable 26, par exemple de l'eau provenant du réseau général de fourniture d'eau. Le réservoir 28 est constitué d'une paroi supérieure 30, d'une paroi inférieure 32 et de parois latérales 34, de telle manière qu'il est fermé. Il comporte des ouvertures 36 situées sur sa paroi supérieure, qui sont en communication directe avec l'enceinte de confinement 2 afin de limiter les pertes de charges en aval du dispositif de limitation 10. Sur le mode de réalisation illustré, les ouvertures 36 sont rectangulaires, elles ont toutes les mêmes dimensions, et elles sont disposées de manière à être sensiblement symétriques et équidistantes par rapport aux axes médians de la longueur et de la largeur de la paroi supérieure.

Le dispositif de limitation 10 comporte un conduit de raccordement 46 qui permet d'assurer des échanges de gaz entre la cellule d'entreposage 4 et le réservoir 28 du dispositif de limitation 10. L'une des extrémités du conduit de raccordement 46 est connectée à un orifice d'arrivée 48 qui débouche dans le réservoir 28 en traversant l'une des parois latérales 34. Sur l'exemple illustré, cette extrémité du conduit de raccordement 46 se raccorde au réservoir 28 par un évasement en tulipe, ce qui permet de limiter les pertes de charges. L'autre extrémité du conduit de raccordement 46 traverse la cloison support et débouche dans la cellule d'entreposage 4. Le conduit de raccordement 46 est dimensionné à l'aide de calculs de débits à extraire de la cellule d'entreposage 4 pour que la pression dans la cellule d'entreposage 4 ne dépasse pas une « pression de sécurité » $P_S$ correspondant à la tenue en pression des organes de confinement les plus fragiles, par exemple des clapets coupe-feu 18. Le débit de gaz maximum à traiter est déterminé en évaluant l'expansion thermodynamique des gaz suivant la cinétique de développement de l'incendie, les méthodes usuelles d'estimation de la puissance du feu, et le bilan de la réaction chimique de combustion, c'est-à-dire les gaz générés et l'oxygène consommé par la combustion.

Le réservoir 28 comporte des éléments de séparations 50 se présentant sensiblement sous la forme de plaques rectangulaires. Les éléments de séparation 50 sont fixés à la paroi supérieure 30 du réservoir 28 et sont immergés, en fonctionnement normal, dans le liquide 26, sans atteindre la paroi inférieure 32 du réservoir 28. A chaque ouverture 36 de la paroi supérieure 30 est associé un ensemble de quatre éléments de séparation 50 qui sont deux à deux parallèles et sont soudés entre eux le long de chaque bord de ladite ouverture 36 de forme rectangulaire. Par conséquent, la longueur des éléments de séparation est légèrement inférieure à la hauteur du réservoir 28, la largeur de deux des éléments de séparation 50 est égale à la longueur des ouvertures 36, et la largeur des deux autres éléments de séparation 50 est égale à la largeur des ouvertures 36.

Les éléments de séparation 50 définissent dans le réservoir 28 quatre chambres externes 52, qui sont directement en communication avec l'enceinte de confinement 2 par l'intermédiaire des ouvertures 36 du réservoir 28.

Les éléments de séparation 50 et les parois latérales 34 définissent dans le réservoir 28 une chambre interne 54, qui est directement en communication avec la cellule d'entreposage 4 par l'intermédiaire de l'orifice d'arrivée 48 du conduit de raccordement 46.

La surface de chaque chambre externe 52 est désignée par « SI ». Elle correspond aussi à la surface de chaque ouverture 36. La somme des surfaces des chambres externes 52 est désignée par « S ». Elle correspond aussi à la somme des surfaces de toutes les ouvertures 36. Il existe une relation entre la somme « S » des surfaces des ouvertures 36, la surface « SI » de chaque ouverture 36 et le nombre N d'ouvertures 36 du réservoir 28. Cette relation est : SI = S/N.

La somme « S » des surfaces des chambres externes 52 et des surfaces des ouvertures 36 est déterminée à l'aide d'une évaluation du débit maximum à laisser s'échapper de la cellule d'entreposage 4 et de la vitesse moyenne de remontée des bulles dans le liquide 26. La valeur moyenne communément admise par les hommes de l'art pour cette vitesse de remontée est sensiblement 30 cm/s à température ambiante.

La surface de la chambre interne 54 est désignée par « s ». Le rapport de la surface « s » de la chambre interne 54 sur la somme « S » des surfaces des chambres externes 52 est une caractéristique déterminante du réglage du dispositif de limitation 10. En effet, associée au paramètre de hauteur de liquide 26 dans le réservoir 28, et au dimensionnement du dispositif de limitation 10, cette caractéristique permet de fixer les pressions de déclenchement du dispositif de limitation 10. Elle doit satisfaire la relation suivante :

$$\frac{s}{S} = \frac{p\_adm}{p\_ech}$$

où p_adm est la pression de déclenchement de l'admission des gaz dans la cellule d'entreposage 4 depuis l'enceinte de confinement 2, et p_ech est la pression de déclenchement de l'échappement des gaz de la cellule d'entreposage 4 vers l'enceinte de confinement 2.

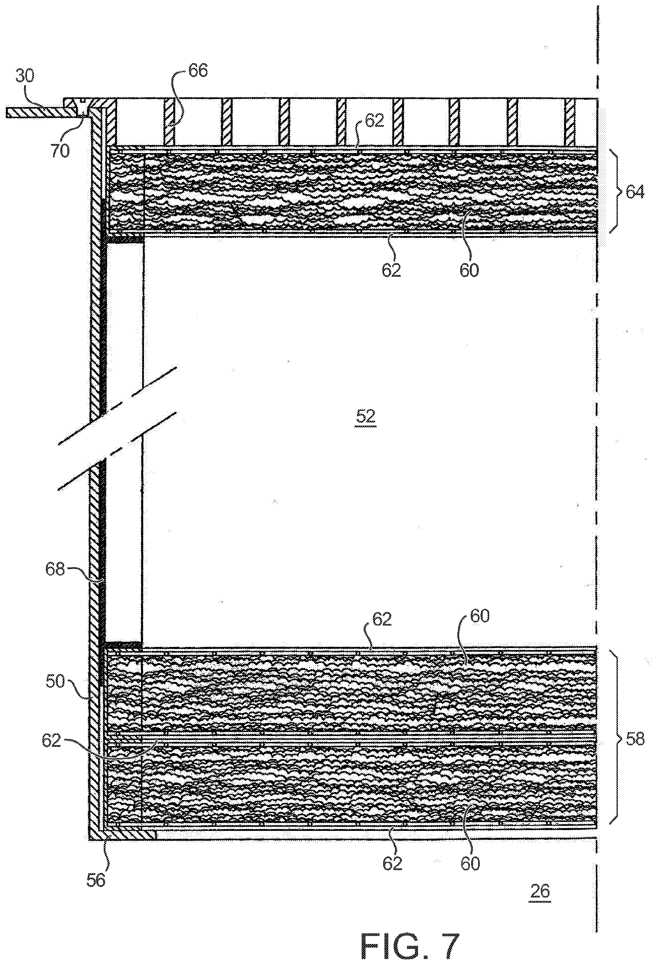

Comme illustré sur la figure 7, qui représente une vue partielle, en coupe longitudinale, d'une chambre externe 52 du réservoir 28, chaque élément de séparation 50 du réservoir est muni d'une petite plaque 56, dite « plaque casse vague », qui est soudée à son extrémité qui est immergée dans le liquide 26 en fonctionnement normal du dispositif de limitation 10. Chaque plaque casse vague 56 s'étend selon une direction sensiblement perpendiculaire à celle dudit élément de séparation 50, vers l'intérieur de la chambre externe 52 délimitée par celui-ci. Ces plaques casse vague 56 ont une largeur suffisamment petite pour ne pas réduire trop la surface « SI » des chambres externes 52. Elles ont une largeur suffisamment grande pour limiter des effets de vague dans les chambres externes 52, c'est-à-dire le risque de mise en communication directe des chambres externes 52 et de la chambre interne 54 sans créer un phénomène de bullage dans le liquide 26. Leur présence permet d'assurer la présence de liquide 26 le long des éléments de séparation 50. Cela permet de favoriser la génération d'un milieu diphasique et d'éviter la séparation des phases sous l'effet dynamique, lors de l'échappement des gaz pendant la phase de développement de l'incendie 200.

La longueur développée de bullage correspond à la somme des périmètres des chambres externes 52. Elle est déterminée par la relation suivante:

$$Lb = \frac{Dt}{Ev \times Vv}$$

où

- Lb représente la longueur de bullage,
- Dt représente le débit de gaz à traiter,
- Ev représente l'épaisseur de la veine de gaz passant de la chambre interne vers la chambre externe,
- Vv représente la vitesse des gaz au niveau de la veine.

Ainsi, il est possible de fixer le nombre de chambres externes 52 afin de fournir une longueur de bullage suffisante pour limiter les pertes de charge et par suite les pressions de fonctionnement pour le débit de gaz maximum.

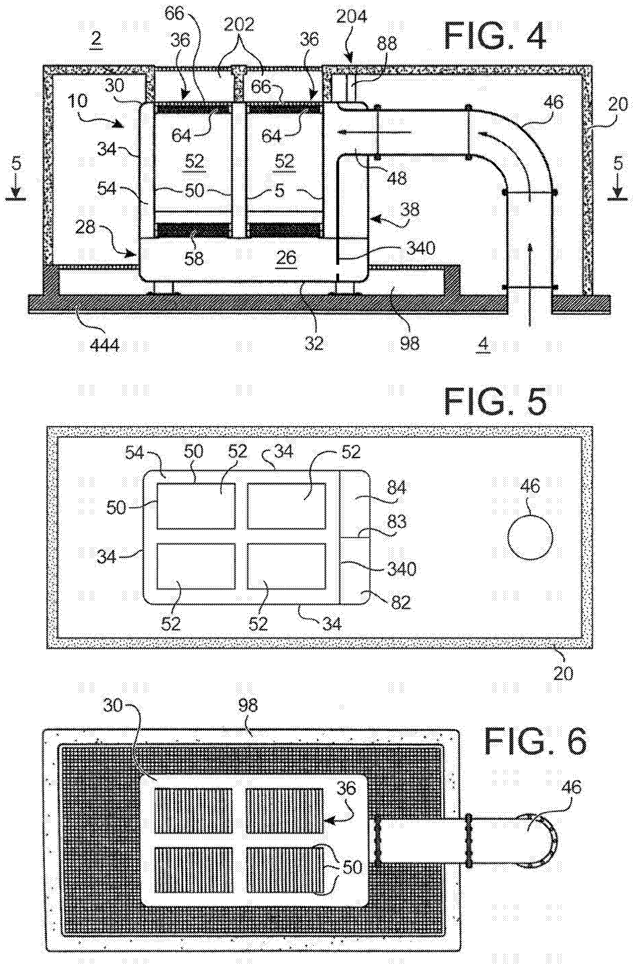

Comme illustré sur la figure 4, le dispositif de limitation 10 comporte des dispositifs de fractionnement de bulles 58, qui sont destinés à fractionner les grosses bulles de gaz formées le long des plaques casse vague 56, en de petites bulles, afin d'augmenter au maximum la surface d'échange entre le gaz et le liquide 26, lors de la phase de développement d'un incendie 200. Les petites bulles sont définies comme étant des bulles ayant un diamètre compris entre 1 et 5 mm, et il est communément admis par les hommes de l'art que la taille des bulles est inversement liée à l'efficacité de l'échange thermique. Les dispositifs de fractionnement de bulles 58 favorisent donc l'échange thermique entre les gaz et le liquide 26. Ils assurent également le meilleur compromis possible entre la limitation des pertes de charges et la non-coalescence des bulles, ainsi que la non propagation des étincelles, des particules incandescentes, des aérocontaminants et des suies.

Chaque dispositif de fractionnement de bulles 58 est constitué d'une superposition de couches 60 de fils métalliques entremaillés, chaque couche 60 étant interposée entre deux grilles de maintien 62. Sur le mode de réalisation illustré, les couches 60 sont au nombre de deux. De préférence, chaque dispositif de fractionnement de bulles 58 est disposé en partie inférieure d'une chambre externe 52 et obture celle-ci. Il repose sur les plaques casse vague 56 de ladite chambre externe 52. En fonctionnement normal, les dispositifs de fractionnement de bulles 58 sont immergés dans le liquide 26 des chambres externes 52 du dispositif de limitation 10.

Comme illustré sur la figure 4, le dispositif de limitation 10 comporte également des dispositifs anti-éclaboussure 64, qui sont destinés à limiter les éclaboussures de liquide 26 à travers les ouvertures 36 lors de l'échappement des gaz de la cellule d'entreposage 4.

Chaque dispositif anti-éclaboussure 64 est constitué d'une couche 60 de fils métalliques entremaillés, ladite couche 60 étant interposée entre deux grilles de maintien 62, ainsi que d'un caillebotis 66 reposant sur la grille de maintien 62 supérieure. Chaque dispositif anti-éclaboussure 64 est disposé en partie supérieure d'une chambre externe 52 et obture l'ouverture 36 qui lui est associée. Le caillebotis 66 est fixé sur la face extérieure de la paroi supérieure 32 du réservoir 28, par des moyens de fixation appropriés 70, comme par exemple des vis.

En outre, des entretoises 68 sont disposées contre la face intérieure des éléments de séparation 50 de chaque chambre externe 52. Ces entretoises 68 sont interposées entre la grille de maintien supérieure 62 du dispositif de fractionnement de bulles 58 et la grille de maintien 62 inférieure du dispositif anti-éclaboussure 64. Elles assurent le maintien en position des dispositifs de fractionnement de bulles 58 et servent de support aux dispositifs anti-éclaboussure 64.

Le dispositif de limitation 10 comporte en outre un système de régulation des niveaux de liquide 80 qui permet :

- de maintenir, en fonctionnement normal, le niveau du liquide 26 dans le réservoir 28, en assurant une parfaite étanchéité de celui-ci, et
- de remplir le réservoir 28 en liquide 26, lors de l'échappement des gaz pendant la phase de développement de l'incendie 200, afin de compenser la consommation du liquide 26, par évaporation et ainsi de garantir la continuité de l'échange thermique entre les gaz et le liquide 26 pour refroidir les gaz de combustion jusqu'à une température inférieure à la température seuil de ré-inflammation.

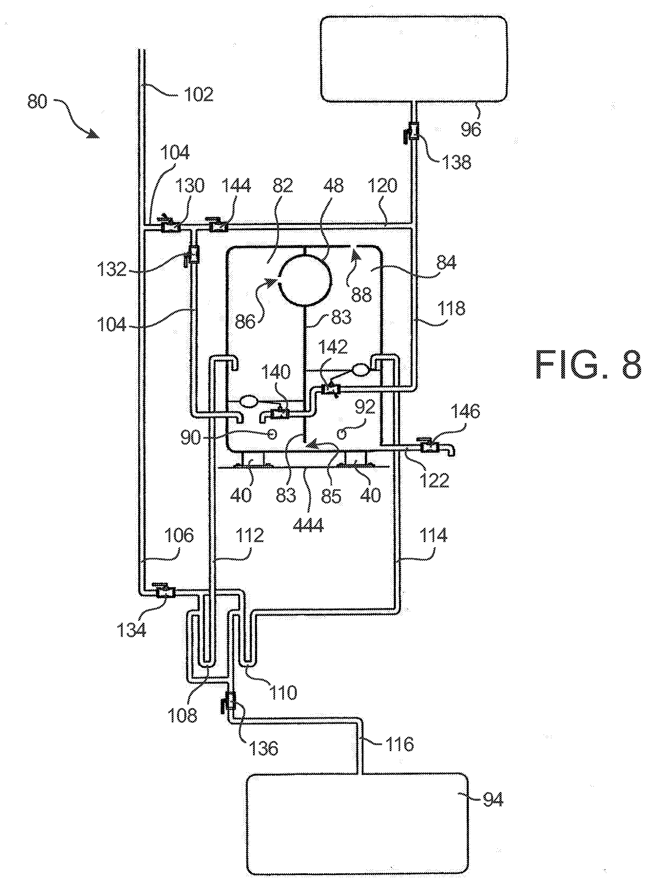

Le système de régulation des niveaux de liquide 80 est un système mécanique, qui est représenté de manière schématique sur la figure 8.

Le système de régulation des niveaux de liquide 80 comporte un premier compartiment de régulation 82 et un deuxième compartiment de régulation 84, ces deux compartiments de régulation 82, 84 étant fermés.

Sur l'exemple illustré aux figures, les deux compartiments de régulation 82, 84 sont accolés au réservoir 28 et sont situés dans des zones ne subissant pas les bouillonnements des gaz lors des différentes phases de fonctionnement du dispositif de limitation 10, c'est-à-dire les phases d'échappement et d'admission.

Ils sont séparés par une paroi commune aux compartiments 83 et sont en communication l'un avec l'autre par l'intermédiaire d'un orifice de communication des compartiments 85 qui traverse ladite paroi commune 83 dans sa partie inférieure de façon à rester immergé pendant toutes les phases de fonctionnement du dispositif de limitation 10.

Sur l'exemple illustré aux figures, les deux compartiments de régulation 82, 84 et le réservoir 28 sont inclus dans un même carter 38. Les deux compartiments de régulation 82, 84 sont séparés du réservoir 28 par une paroi commune 340 qui est la paroi latérale 34 du réservoir 28 sur laquelle débouche le conduit de raccordement 46. Par conséquent, le conduit de raccordement 46 traverse les deux compartiments de régulation 82, 84 de manière symétrique, au niveau de la paroi commune aux bacs 83. Le carter 38 est fixé au sol de l'enceinte de confinement 2 sur la cloison support 42 par des moyens de fixation 40 tels que des platines de fixation.

Sur l'exemple illustré aux figures, le carter 38 du dispositif de limitation 10, présente sensiblement une forme de parallélépipède rectangle.

Le premier compartiment de régulation 82 est à la pression de la cellule d'entreposage 4 par l'intermédiaire d'un orifice d'aération 86 directement relié au conduit de raccordement 46, et il est raccordé au réservoir 28 par l'intermédiaire d'un premier orifice de communication 90 situé en partie inférieure de la paroi commune 340.

Le deuxième compartiment de régulation 84 est à la pression de l'enceinte de confinement 2 par l'intermédiaire d'un évent 88 directement relié à l'enceinte de confinement 2, et il est raccordé au réservoir 28 par l'intermédiaire d'un deuxième orifice de communication 92 situé en partie inférieure de la paroi commune 340. L'évent 88 est par exemple un tube en acier inoxydable.

Le système de régulation des niveaux de liquide 80 comporte aussi un réservoir de récupération 94 vers lequel est évacué le liquide 26, en cas de dysfonctionnement entraînant un surplus de liquide dans le dispositif de limitation 10.

Le système de régulation des niveaux de liquide 80 comporte aussi une réserve 96 de liquide 26, située en hauteur par rapport au dispositif de limitation 10. La réserve 96 permet d'alimenter le carter 38 en liquide 26, en cas de baisse du niveau de liquide 26 dans le dispositif de limitation 10. Sa capacité est déterminée en fonction de la puissance du feu.

Le système de régulation des niveaux de liquide 80 comporte aussi un circuit d'alimentation et d'évacuation, qui comporte :

- un tuyau d'alimentation 102 du carter 38 en liquide 26 ;
- une première dérivation 104 du tuyau d'alimentation 102 qui alimente directement le carter 38 via le premier compartiment de régulation 82, et sur laquelle sont disposées en série une première vanne d'alimentation 130 et une deuxième vanne d'alimentation 132;
- une deuxième dérivation 106 du tuyau d'alimentation 102, sur laquelle est disposée une vanne des siphons 134 ;
- un premier siphon 108 et un deuxième siphon 110, qui sont alimentés par la deuxième dérivation 106, après la vanne des siphons 134 ;
- un premier trop-plein 112 et un deuxième trop-plein 114, qui débouchent respectivement, à un niveau donné, dans le premier compartiment de régulation 82 et dans le deuxième compartiment de régulation 84, et qui sont reliés, respectivement, à chacun des deux siphons 108, 110 ;
- un tuyau d'évacuation 116 du surplus de liquide 26 dans le carter 38, dans lequel se déversent les deux siphons 108, 110, qui débouche dans le réservoir de récupération 94, et sur lequel est disposée une vanne d'isolement 136 en aval du lieu où arrivent les deux siphons 108, 110 ;
- un tuyau de remplissage 118 du carter 38 en liquide 26, sur lequel est disposée une vanne de remplissage 138 ; le tuyau de remplissage 118 alimente le premier compartiment de régulation 82, par l'intermédiaire d'une première vanne à flotteur 140 et d'une deuxième vanne à flotteur 142 installées respectivement dans le premier compartiment de régulation 82 et dans le deuxième compartiment de régulation 84, les deux vannes à flotteur 140, 142 étant disposées en série sur ledit tuyau de remplissage 118 ;
- un tuyau de liaison 120 sur lequel est disposée une vanne de secours 144, qui est raccordé à la première dérivation 104 du tuyau d'alimentation 102 entre les deux vannes d'alimentation 130, 132, et qui est raccordé au tuyau de remplissage 118 entre la vanne de remplissage 138 et les deux vannes à flotteur 140, 142, de manière à alimenter le carter 38 via le premier compartiment de régulation 82, en court-circuitant les vannes à flotteur 140, 142 ;
- un tuyau de vidange 122, sur lequel est disposée une vanne d'isolement 146, qui permet l'évacuation du liquide 26 pour la maintenance du dispositif de limitation 10.

Le rôle des différents éléments du système de régulation des niveaux de liquide 80 va être précisé ci-après.

La première vanne à flotteur 140, qui est fermée en fonctionnement normal, est située dans le premier compartiment de régulation 82 raccordé à la chambre interne 54 ; le positionnement de cette première vanne à flotteur 140 dans le premier compartiment de régulation 82 définit la quantité de liquide 26 qui se trouve dans le dispositif de limitation 10.

La deuxième vanne à flotteur 142, qui est ouverte en fonctionnement normal, est située dans le deuxième compartiment de régulation 84 raccordé aux chambres externes 52. Le positionnement de la deuxième vanne à flotteur 142 dans le deuxième compartiment de régulation 84 est défini par la pression de déclenchement du dispositif de limitation 10.

Le dispositif de limitation 10 est alimenté en liquide 26 lorsque les deux vannes à flotteur 140 et 142 sont ouvertes simultanément, c'est-à-dire quand les niveaux de liquide 26 dans chacun des deux compartiments de régulation 82 et 84 baissent simultanément.

La réserve de liquide 96 a une capacité qui est déterminée en fonction de la puissance du feu. Elle est secourue par l'ouverture manuelle des deux vannes d'alimentation 130, 132 sur la première dérivation 104 du tuyau d'alimentation 102. Elle permet d'alimenter, par gravité, le carter 38 en liquide 26 via le premier compartiment de régulation 82, dans l'une ou l'autre des deux situations suivantes :

- la vanne de remplissage 138 étant ouverte, la vanne de secours 144 est fermée, et le liquide 26 provenant de la réserve 96 alimente le carter 38 en s'écoulant dans le premier compartiment de régulation 82 à travers les deux vannes à flotteur 140, 142, ou
- la vanne de remplissage 138 étant ouverte, la vanne de secours 144 et la deuxième vanne d'alimentation 132 sont ouvertes manuellement, et le liquide 26 provenant de la réserve 96 alimente le carter 38 en s'écoulant dans le premier compartiment de régulation 82, en court-circuitant ainsi les deux vannes à flotteur 140, 142.

Les trop-pleins 112, 114 et les siphons 108, 110 permettent l'évacuation du liquide 26 vers le réservoir de récupération 94, lors d'un dysfonctionnement entraînant un surplus de liquide 26 dans le dispositif de limitation 10 ; La vanne de remplissage 138 est normalement ouverte. Elle est fermée manuellement en cas d'alimentation forcée du dispositif de limitation 10 en liquide 26 afin d'assurer le bon fonctionnement du dispositif de limitation 10.

La vanne de secours 144 est utilisée pour un pilotage manuel de l'installation. Un poste de pilotage manuel du dispositif de limitation 10 est implanté à l'extérieur de l'enceinte de confinement 2. Ce poste dispose d'indicateurs visuels des niveaux de liquide 26 dans le dispositif de limitation 10. Il permet une manœuvre de l'ensemble des vannes manuelles 138, 144, 130 et 132 associées au dispositif de limitation 10 de manière déportée en fonction des indications de niveaux.

L'alimentation en liquide 26 du dispositif de limitation 10 peut être résumée dans le tableau suivant :

| | Source | Vanne de secours 144 | Deuxième vanne d'alimenta tion 132 | Vanne de remplis sa ge 138 | Première vanne d'alimenta tion 130 |
|---|---|---|---|---|---|
| Régulation par vannes à flotteur 140 et 142 | Réserve 96 | Fermée | Fermée | Ouverte | Fermée |
| | Tuyau d'alimenta tion 102 | Ouverte | Fermée | Fermée | Ouverte |
| Alimenta tion forcée | Réserve 96 | Ouverte | Ouverte | Ouverte | Fermée |
| | Tuyau d'alimenta tion 102 | Fermée | Ouverte | Fermée | Ouverte |

Le dispositif de limitation 10 comporte aussi un bac de rétention 98 (voir figures 4 et 6), qui est situé sous le carter 38, et dont la capacité est égale au volume de liquide 26 dans le dispositif de limitation 10.

Comme illustré sur les figures 2 et 4, le dispositif de limitation 10 comporte une protection pare-feu 20, constituée d'un encoffrement de panneaux de plâtre, disposée autour du carter 38 et fixée sur la cloison support. Cette protection pare-feu 20 est dotée d'ouvertures 202 qui sont agencées en regard des ouvertures 36 du réservoir 28 et à la verticale de celles-ci. Elle assure une continuité de la sectorisation au feu de la cellule d'entreposage 4 jusqu'aux ouvertures 36 permettant l'échappement des gaz vers l'enceinte de confinement 2. Elle est équipée d'un bloc porte coupe-feu (non représenté) permettant un accès au carter 38 pour des besoins de maintenance. Elle dispose également d'une traversée de paroi 204 qui permet le passage de l'évent 88 du deuxième compartiment de régulation 84.

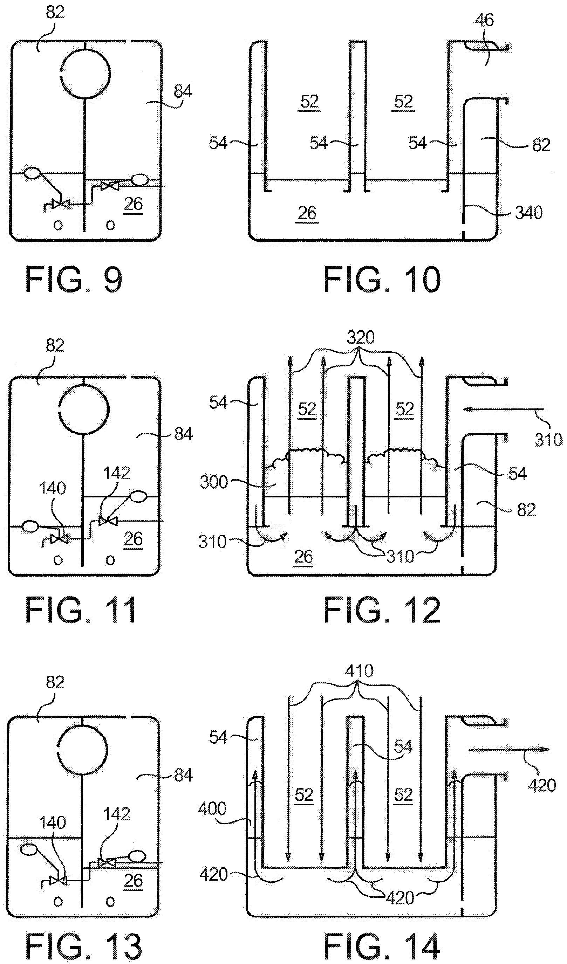

On va maintenant décrire le fonctionnement du dispositif de limitation 10, en référence aux figures 9 et 10, 11 et 12, 13 et 14, qui représentent respectivement les deux compartiments de régulation 82 et 84 en coupe transversale en élévation, et les chambres externes 52 et interne 54 en coupe verticale longitudinale, dans les situations respectives de fonctionnement normal, de première phase d'un incendie et de deuxième phase d'un incendie.

En fonctionnement normal (figures 9 et 10), le dispositif de limitation 10 garantit le confinement de la cellule d'entreposage 4. En effet, la présence de liquide 26 au-dessus des éléments de séparations 50 délimitant les chambres externes 52 de la chambre interne 54, assure l'étanchéité de la cellule d'entreposage 4 au niveau du dispositif de limitation 10.

En situation d'incendie, le dispositif de limitation 10 décrit précédemment fonctionne de manière autonome de la façon suivante.

Lors de la première phase 200 de l'incendie (figures 11 et 12), correspondant au développement d'un incendie généralisé et non-maîtrisé dans la cellule d'entreposage 4, la pression et la température augmentent très fortement. La chambre interne 54 du réservoir 28 est en communication avec la cellule d'entreposage 4 en feu par l'intermédiaire du conduit de raccordement 46, par conséquent la pression y augmente très fortement. Le niveau de liquide 26 de la chambre interne 54 baisse jusqu'au niveau des plaques casse vague 56 situées aux extrémités des éléments de séparations 50. Quand la pression dans la chambre interne 54 atteint la pression seuil de déclenchement p_ech, les gaz chauds de combustion passent sous les plaques casse-vague 56 (flèches 310), et forment de grosses bulles de gaz. Lors de leur remontée à la surface des chambres externes 52, les grosses bulles sont fractionnées en de très petites bulles 300 par les dispositifs de fractionnement de bulles 58. Les petites bulles 300 remontent à la surface libre et les gaz contenus dans ces petites bulles 300 s'échappent vers l'enceinte de confinement 2 (flèches 320). Le niveau de liquide 26 dans le premier compartiment de régulation 82 qui régule la chambre interne 54 diminue et par conséquent, la première vanne à flotteur 140 s'ouvre. La deuxième vanne à flotteur 142 est fermée car le niveau de liquide 26 monte dans les chambres externes 52. La deuxième vanne à flotteur 142 ne s'ouvre que lorsque le niveau de liquide 26 dans le deuxième compartiment de régulation 84 qui régule les chambres externes 52 diminue suite à la consommation de liquide 26 par évaporation. Par conséquent, le système de régulation des niveaux de liquide 80 est mis en marche et le dispositif de limitation 10 est alimenté en liquide 26. La vanne de secours 144 et la deuxième vanne d'alimentation 132 peuvent être manuellement ouvertes à distance pour assurer l'alimentation en liquide 26 du réservoir 28, à la suite d'un contrôle des indicateurs de niveau de liquide 26 dans le poste de pilotage manuel.

Le dispositif de limitation 10 s'est déclenché de manière autonome pour une pression seuil p_ech, inférieure à la « pression de sécurité » Ps des organes de confinement de la cellule d'entreposage 4. Ce seuil de pression est déterminé à la construction en fonction des paramètres de surface des chambres « S » et « s », et il est ajustable par le niveau de remplissage en liquide 26 dans le réservoir 28. Les gaz de combustion sont refroidis par bullage dans les chambres externes 52, jusqu'à une température inférieure à la température seuil de ré inflammation, empêchant ainsi la propagation de l'incendie à l'enceinte de confinement 2. L'important taux de renouvellement de la ventilation de l'enceinte de confinement 2, relativement au volume des gaz s'échappant du dispositif de limitation 10 assure une dilution des gaz. Le système de ventilation 12, 14, 16, 18 de l'enceinte de confinement 2 assure le maintien du confinement dynamique et le traitement de l'atmosphère de l'enceinte de confinement 2 en opposant notamment une dernière barrière de filtration 16 avant le rejet dans l'environnement extérieur 8.

Lors de la deuxième phase 208 de l'incendie (Figures 13 et 14), correspondant à une phase d'extinction de l'incendie, la température et la pression diminuent très fortement, la pression atteignant de très fortes valeurs négatives. Dès que la cellule d'entreposage 4 se trouve en dépression, la chambre interne 54 et le premier compartiment de régulation 82 qui régule cette chambre interne 54, en communication avec la cellule d'entreposage 4, sont eux aussi en dépression. Dès que la dépression dans la chambre interne 54 atteint le seuil p_adm, le dispositif de limitation 10 fonctionne de manière totalement réversible. L'air frais provenant de l'enceinte de confinement 2 (flèches 410) passe sous les plaques casse-vague 56 des chambres externes 52 (flèches 420), et il se forme des bulles d'air 400 qui remontent à la surface du liquide 26 de la chambre interne 54 pour être introduit dans la cellule d'entreposage 4 et ainsi limiter la dépression dans la cellule d'entreposage 4 à une dépression inférieure à la dépression de sécurité : -$P_S$. Les niveaux de liquide 26 de la chambre interne 54 et du premier compartiment de régulation 82 en communication avec cette chambre interne 54 montent, la première vanne à flotteur 140 est fermée, et par conséquent, le système d'alimentation en liquide 80 ne se déclenche pas. L'apport d'air frais peut alors générer une ré-inflammation pour laquelle le dispositif de limitation 10 demeure disponible et efficace.

Une vidange accidentelle des deux siphons 108, 110 constitue le mode de défaillance le plus préjudiciable au dispositif de limitation 10, car elle résulte en une perte de la différence de pression entre les deux compartiments de régulation 82, 84, et donc entre les chambres interne 54 et externes 52.

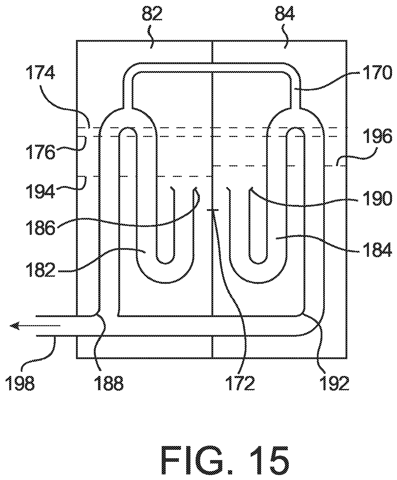

Une variante de réalisation de l'agencement de siphons, qui pallie une telle vidange accidentelle, est illustrée sur la figure 15.

Selon cette variante de réalisation, un premier et un deuxième siphons 182, 184 sont intégrés dans les compartiments de régulation 82, 84, respectivement, en remplacement des trop-pleins 112, 114 des siphons 108, 110 et de l'alimentation 106 des siphons 108, 110. Ils assurent, de façon intégrée, les fonctions de trop-plein de chacun des compartiments de régulation 82, 84. L'intégration des siphons permet de garantir leur non-dénoyage.

L'une des extrémités 186 du premier siphon 182 s'ouvre au-dessous du niveau nominal 194 de liquide 26 dans le premier compartiment de régulation 82. L'autre extrémité 188 du premier siphon 182 se raccorde sur un tuyau d'évacuation 198 vers le réservoir de récupération 94. L'une des extrémités 190 du deuxième siphon 184 s'ouvre au-dessous du niveau nominal 196 de liquide 26 dans le deuxième compartiment de régulation 84. L'autre extrémité 192 du deuxième siphon 184 se raccorde sur le tuyau d'évacuation 198. Un tuyau anti-amorçage 170 relie les deux siphons 182, 184 en se raccordant à leurs parties supérieures respectives.

Le remplissage de ces deux siphons 182, 184 est assuré par la présence de liquide 26 dans le réservoir 28, qui est elle-même garantie par le fonctionnement des vannes à flotteur 140, 142, et par le fait que les extrémités libres 186, 190 des deux siphons 182, 184 débouchent au-dessous du niveau nominal 194, 196 respectif des compartiments de régulation 82, 84, et au-dessus du niveau de bullage 172. La présence du tuyau anti-amorçage 170 permet d'éviter que les siphons 182, 184 ne se vident jusqu'à ces extrémités libres 186, 190, respectivement.

Sur la figure 15 sont également indiqués le niveau maximal 174 de liquide avant débordement dans les siphons 182, 184 qui assurent également une fonction de trop-plein, ainsi que le niveau 176 de liquide 26 dans les compartiments de régulation 82, 84, le premier compartiment de régulation 82 étant en phase d'admission et le deuxième compartiment de régulation 84 étant en phase d'échappement.

## EXEMPLE DE RÉALISATION

Les différents composants du dispositif de limitation 10 sont normalement dimensionnés sur la base d'une évaluation enveloppe des conditions thermodynamiques maxima d'un incendie généralisé non maîtrisé d'une cellule d'entreposage 4. Cette étude préalable permet de déterminer les seuils de pression de déclenchement p_ech et p_adm du dispositif de limitation 10 et le débit devant s'échapper par le dispositif de limitation 10 pour maintenir la pression de la cellule d'entreposage 4 à une pression inférieure à la « pression de sécurité » Ps des organes de confinement, c'est-à-dire des clapets coupe-feu, des portes de sas, des cloisons.

Un exemple de dimensionnement est fourni ci-dessous, en considérant un incendie généralisé à cinétique très lente, ce qui peut être le cas pour des déchets conditionnés en fûts métalliques.

- pression de sécurité $P_s$ des organes de confinement : 2100 Pa

- volume de l'enceinte de confinement 2 : 15000 m$^3$
- volume de la cellule d'entreposage 4 : 3100 m$^3$.
- taux de renouvellement de la ventilation : 2 Volumes/h
- pression de déclenchement du dispositif de limitation 10, 11, lors de la première phase 200 de développement de l'incendie : 1800 Pa
- pression de déclenchement du dispositif de limitation 10, 11 lors de la phase d'admission : -1800 Pa
- débit théorique des gaz s'échappant de la cellule d'entreposage 4 : 2000 m$^3$/h
- température théorique des gaz s'échappant de la cellule 1 : 550°C
- hauteur du carter 38 (ou du réservoir 28) : 1,2 mètre
- largeur du carter 38 (ou du réservoir 28) : 0,9 mètre
- longueur du carter 38 : 1,65 mètre
- volume de liquide dans le dispositif de limitation 10, 11 : 0,6 m$^3$
- diamètre du conduit de raccordement : 400 mm
- somme S des surfaces des chambres externes 52 : 0,6 m$^2$
- largeurs des éléments de séparation 50 : identiques à celles des bords des ouvertures 36
- dimensions intérieures de chaque chambre externe : 300 mm $\times$ 500 mm
- épaisseur des éléments de séparation : 5 mm
- hauteur des éléments de séparation : 900 mm
- distance d'immersion dans le liquide 26 des extrémités des éléments de séparation 50 : 90 mm à l'équipression entre la chambre interne 54 et les chambres externes 52 (pour une pression de déclenchement de 1800 Pa)
- épaisseur des couches de fils métalliques entremaillés pour les dispositifs de fractionnement de bulles 58 et pour les dispositifs anti-éclaboussures 64 : 48 mm par dispositif
- diamètre des fils métalliques entremaillés pour les dispositifs de fractionnement de bulles 58 et pour les dispositifs anti-éclaboussures 64 : 0,1 mm
- dimensions des mailles des grilles de maintien pour les dispositifs de fractionnement de bulles 58 : mailles carrées de côtés compris entre 1 cm et 3 cm
- dimensions des mailles des grilles de maintien pour les dispositifs anti-éclaboussures 64 : mailles carrées de 25 mm $\times$ 25 mm
- épaisseur des plaques casse vague 56 : 5 mm
- largeur des plaques casse vague 56 : 30 mm
- largeur des entretoises 68 : 1 à 2 cm
- hauteur des compartiments de régulation 82, 84 : 1200 mm
- largeur des compartiments de régulation 82, 84 : 450 mm
- longueur des compartiments de régulation : 200 mm
- diamètre de chaque trop-plein 112, 114 : 30 mm
- longueur de chaque siphon 108, 110 : supérieure à 300 mm
- diamètre du premier orifice d'aération 86 : 10 mm
- diamètre du premier orifice de communication 90 : 50 mm
- diamètre du deuxième orifice d'aération 86 : 10 mm
- diamètre du deuxième orifice de communication 90 : 50 mm
- volume du bac de rétention 98 : 0,6 m$^3$
- épaisseur de la couche additionnelle 156 : 2 cm
- durée du coupe-feu garantie par la présence de la couche additionnelle 156 : 2 heures.

**Revendications**

1. Enceinte de confinement (2) comprenant une cellule d'entreposage (4) implantée dans cette dernière et un dispositif de limitation (10) des conséquences ultimes d'un incendie généralisé non maîtrisé dans ladite cellule d'entreposage (4), le dispositif de limitation (10) étant disposé dans l'enceinte de confinement (2), à l'extérieur de la cellule d'entreposage (4), et étant relié à la cellule d'entreposage (4) par l'intermédiaire d'un conduit de raccordement (46), le dispositif de limitation (10) comportant :

   - un réservoir (28) fermé contenant un liquide non inflammable (26) ;
   - le conduit de raccordement (46) ;
   - une protection pare-feu (20) ; et
   - un système de régulation des niveaux de liquide non inflammable (80) ;
   ledit réservoir (28) comportant :

- une paroi supérieure (30), une paroi inférieure (32) et des parois latérales (34), la paroi supérieure (30) ayant au moins une ouverture (36) ;
- des éléments de séparation (50), fixés par une extrémité supérieure sur ladite au moins une ouverture (36) de ladite paroi supérieure (30), sans atteindre ladite paroi inférieure (32) du réservoir (28), les éléments de séparation (50) étant immergés, en fonctionnement normal du dispositif, dans le liquide non inflammable (26), lesdits éléments de séparation (50) définissant une chambre interne (54) et au moins une chambre externe (52), la chambre interne (54) et ladite au moins une chambre externe (52) étant en communication via le liquide non inflammable (26), la chambre interne (54) étant en communication directe avec la cellule d'entreposage (4) par l'intermédiaire du conduit de raccordement (46), et ladite au moins une chambre externe (52) étant en communication directe avec l'enceinte de confinement (2) par l'intermédiaire de ladite au moins une ouverture (36).

2. Enceinte de confinement (2) selon la revendication 1, **caractérisée en ce que** le dispositif de limitation (10, 11) est conçu de manière à satisfaire la relation suivante :

$$\frac{s}{S} = \frac{p\_adm}{p\_ech}$$

où :

- s est la surface du liquide inflammable présent dans la chambre interne (54),
- S est la somme des surfaces du liquide inflammable présent dans chacune des chambres externes (52),
- p_adm est la pression de déclenchement de l'admission des gaz dans la cellule d'entreposage (4) depuis l'enceinte de confinement (2) par le dispositif de limitation (10), et
- p_ech est la pression de déclenchement de l'échappement des gaz de la cellule d'entreposage (4) vers l'enceinte de confinement (2) par le dispositif de limitation (10).

3. Enceinte de confinement (2) selon la revendication 1 ou la revendication 2, **caractérisée en ce que** les éléments de séparation (50) sont au nombre de quatre pour chaque ouverture (36) et chaque ouverture (36) présente un contour rectangulaire.

4. Enceinte de confinement (2)) selon l'une quelconque des revendications 1 à 3, **caractérisée en ce qu'**il comporte quatre chambres externes (52), chacune des chambres externes (52) étant en communication directe avec l'enceinte de confinement par une ouverture (36) respective.

5. Enceinte de confinement (2) selon l'une quelconque des revendications 1 à 4, **caractérisée en ce que** les éléments de séparation (50) sont équipés de dispositifs casse vague (56) formés par des plaques métalliques fixées sur des extrémités inférieures des éléments de séparation (50) qui sont orientés vers l'intérieur de ladite au moins une chambre externe (52).

6. Enceinte de confinement (2) selon l'une quelconque des revendications 1 à 5, **caractérisée en ce que** le dispositif de limitation (10, 11) comporte en outre un dispositif de fractionnement de bulles (58) associé à chaque chambre externe (52).

7. Enceinte de confinement (2) selon la revendication 6, **caractérisée en ce que** ledit au moins un dispositif de fractionnement de bulles (58) est constitué de couches superposées (60) de fils entremaillés, lesdites couches (60) étant séparées les unes des autres par des grilles de maintien (62).

8. Enceinte de confinement (2) selon la revendication 7, **caractérisée en ce que** le dispositif de limitation (10) comprend des entretoises (68) interposées entre une grille de maintien (62) du dispositif de fractionnement de bulles (58), qui est dite supérieure, et une grille de maintien (62), dite inférieure, d'un dispositif anti-éclaboussure (64).

9. Enceinte de confinement (2) selon l'une quelconque des revendications 1 à 8, **caractérisée en ce que** le dispositif de limitation (10) est fixé à une cloison support (43) qui est une cloison étanche constitutive de la cellule d'entreposage (4).

10. Enceinte de confinement (2) selon la revendication 9, **caractérisée en ce que** le conduit de raccordement (46) met en communication la cellule d'entreposage (4) et la chambre interne (54) en traversant la cloison support (43).

**11.** Enceinte de confinement (2) selon la revendication 9 ou la revendication 10, **caractérisée en ce que** la protection pare-feu (20) est formée de panneaux de plâtre, est disposée autour d'un ensemble formé du réservoir (28), du système de régulation des niveaux de liquide non inflammable (80) et du conduit de raccordement (46), et est fixée sur la cloison support (43) .

**12.** Enceinte de confinement (2) selon l'une quelconque des revendications 1 à 11, **caractérisée en ce que** le système de régulation des niveaux de liquide non inflammable (80) comporte :

- un premier compartiment de régulation (82) qui communique avec le réservoir (28) au-dessous de la surface libre du liquide non inflammable (26) et qui communique avec la cellule d'entreposage (4) au-dessus de la surface libre du liquide non inflammable (26) de manière à être à la même pression que la cellule d'entreposage (4),
- un deuxième compartiment de régulation (84) qui communique avec le réservoir (28) au-dessous de la surface libre du liquide non inflammable (26) et qui communique avec l'enceinte de confinement (2) au-dessus de la surface libre du liquide non inflammable (26) de manière à être à la même pression que l'enceinte de confinement (2),
- une première vanne à flotteur (140), disposée dans le premier compartiment de régulation (82) et fermée en fonctionnement normal, et
- une deuxième vanne à flotteur (142), disposée dans le deuxième compartiment de régulation (84) et ouverte en fonctionnement normal,

et **en ce que** le réservoir (28) est alimenté en liquide non inflammable (26) lorsque lesdites deux vannes à flotteurs (140, 142) sont ouvertes simultanément.

**13.** Enceinte de confinement (2) selon la revendication 12, **caractérisée en ce que** le premier compartiment de régulation (82) comporte un orifice d'aération (86) directement relié au conduit de raccordement (46), grâce auquel le premier compartiment de régulation (82) est à la même pression que la cellule d'entreposage (4).

**14.** Enceinte de confinement (2) selon la revendication 12 ou 13, **caractérisée en ce que** le deuxième compartiment de régulation (84) comporte un évent (88) directement relié à l'enceinte de confinement (2), grâce auquel le deuxième compartiment de régulation (84) est à la même pression que l'enceinte de confinement (2) .

**15.** Enceinte de confinement (2) selon l'une quelconque des revendications 12 à 14, **caractérisée en ce que** le système de régulation des niveaux de liquide non inflammable (80) comporte en outre une vanne de secours (144) destinée à un pilotage manuel dudit système.

**16.** Enceinte de confinement (2) selon l'une quelconque des revendications 12 à 15, **caractérisée en ce que** chaque compartiment de régulation (82, 84) comporte un trop-plein (112, 114) muni d'un siphon (108, 110), permettant d'évacuer le liquide non inflammable (26) vers un réservoir de récupération (94).

**17.** Enceinte de confinement (2) selon l'une quelconque des revendications 12 à 16, **caractérisée en ce qu'**il comporte en outre une réserve de liquide non inflammable (94), un tuyau de remplissage (118) alimentant le réservoir (28) à partir de la réserve de liquide non inflammable (96), et un tuyau de vidange (122) .

**18.** Enceinte de confinement (2) selon l'une quelconque des revendications 1 à 17, **caractérisée en ce que** tous ses éléments constitutifs sont en acier inoxydable.

**19.** Enceinte de confinement (2) selon l'une quelconque des revendications 1 à 18, **caractérisée en ce que** le liquide non inflammable (26) contenu dans le réservoir (28) est de l'eau.

**Patentansprüche**

**1.** Sicherheitsbehälter (2), enthaltend eine darin eingesetzte Lagerzelle (4) und eine Eingrenzungsvorrichtung (10) zum Eingrenzen der Endfolgen eines generalisierten unkontrollierten Brandes in der Lagerzelle (4), wobei die Eingrenzungsvorrichtung (10) außerhalb der Lagerzelle (4) in dem Sicherheitsbehälter (2) angeordnet ist und mit der Lagerzelle (4) über eine Anschlussleitung (46) verbunden ist, wobei die Eingrenzungsvorrichtung (10) enthält:

- einen abgeschlossenen Vorratsbehälter (28), der eine nicht brennbare Flüssigkeit (26) enthält;
- die Anschlussleitung (46);
- einen Brandschutz (20); und
- ein System zur Regelung der Pegel der nicht brennbaren Flüssigkeit (80); wobei der Vorratsbehälter (28) enthält:
- eine obere Wand (30), eine untere Wand (32) und Seitenwände (34), wobei die obere Wand (30) zumindest eine Öffnung (36) aufweist;
- Trennelemente (50), die mit einem oberen Ende an der zumindest einen Öffnung (36) der oberen Wand (30) befestigt sind, ohne dabei bis zu der unteren Wand (32) des Vorratsbehälters (28) zu reichen, wobei die Trennelemente (50) im Normalbetrieb der Vorrichtung in die nicht brennbare Flüssigkeit (26) eingetaucht sind, wobei die Trennelemente (50) eine innere Kammer (54) und zumindest eine äußere Kammer (52) definieren, wobei die innere Kammer (54) und die zumindest eine äußere Kammer (52) über die nicht brennbare Flüssigkeit (26) in Verbindung stehen, wobei die innere Kammer (54) über die Anschlussleitung (46) in direkter Verbindung mit der Lagerzelle (4) steht, und wobei die zumindest eine äußere Kammer (52) über die zumindest eine Öffnung (36) in direkter Verbindung mit dem Sicherheitsbehälter (2) steht.

2. Sicherheitsbehälter (2) nach Anspruch 1,
**dadurch gekennzeichnet, dass** die Eingrenzungsvorrichtung (10, 11) so ausgelegt ist, dass sie die nachstehende Beziehung erfüllt:

$$\frac{s}{S} = \frac{p\_adm}{p\_ech}$$

worin:

- s die Oberfläche der in der inneren Kammer (54) vorhandenen nicht brennbaren Flüssigkeit ist,
- S die Summe der Oberflächen der in jeder der äußeren Kammern (52) vorhandenen nicht brennbaren Flüssigkeit ist,
- p_adm der Auslösedruck für den Gaseinlass in die Lagerzelle (4) aus dem Sicherheitsbehälter (2) über die Eingrenzungsvorrichtung (10) ist; und
- p_ech der Auslösedruck für die Freisetzung von Gasen aus der Lagerzelle (4) in den Sicherheitsbehälter (2) durch die Eingrenzungsvorrichtung (10) ist.

3. Sicherheitsbehälter (2) nach Anspruch 1 oder Anspruch 2,
**dadurch gekennzeichnet, dass** die Trennelemente (50) für jede Öffnung (36) vier an der Zahl sind und jede Öffnung (36) einen rechteckigen Umriss hat.

4. Sicherheitsbehälter (2) nach einem der Ansprüche 1 bis 3,
**dadurch gekennzeichnet, dass** er vier äußere Kammern (52) enthält, wobei jede der äußeren Kammern (52) über eine jeweilige Öffnung (36) in direkter Verbindung mit dem Sicherheitsbehälter steht.

5. Sicherheitsbehälter (2) nach einem der Ansprüche 1 bis 4,
**dadurch gekennzeichnet, dass** die Trennelemente (50) mit Wellenbrechvorrichtungen (56) ausgestattet sind, die aus Metallplatten gebildet sind, die an den unteren Enden der Trennelemente (50) befestigt sind, die zum Inneren der zumindest einen äußeren Kammer (52) hin ausgerichtet sind.

6. Sicherheitsbehälter (2) nach einem der Ansprüche 1 bis 5,
**dadurch gekennzeichnet, dass** die Eingrenzungsvorrichtung (10, 11) ferner eine Blasenspaltvorrichtung (58) enthält, die jeder äußeren Kammer (52) zugeordnet ist.

7. Sicherheitsbehälter (2) Anspruch 6,
**dadurch gekennzeichnet, dass** die zumindest eine Blasenspaltvorrichtung (58) aus übereinanderliegenden Schichten (60) von miteinander verflochtenen Drähten besteht, wobei die Schichten (60) durch Haltegitter (62) voneinander getrennt sind.

**8.** Sicherheitsbehälter (2) nach Anspruch 7,
**dadurch gekennzeichnet, dass** die Eingrenzungsvorrichtung (10) Verstrebungen (68) enthält, die zwischen einem Haltegitter (62) der Blasenspaltvorrichtung (58), oberes Haltegitter genannt, und einem Haltegitter (62) einer Spritzschutzvorrichtung (64), unteres Haltegitter genannt, angeordnet sind.

**9.** Sicherheitsbehälter (2) nach einem der Ansprüche 1 bis 8,
**dadurch gekennzeichnet, dass** die Eingrenzungsvorrichtung (10) an einer Stütztrennwand (43) befestigt ist, bei der es sich um eine dichte Trennwand, aus welcher die Lagerzelle (4) besteht, handelt.

**10.** Sicherheitsbehälter (2) nach Anspruch 9,
**dadurch gekennzeichnet, dass** die Anschlussleitung (46) die Lagerzelle (4) mit der inneren Kammer (54) in Verbindung setzt, indem sie durch die Stütztrennwand (43) hindurch verläuft.

**11.** Sicherheitsbehälter (2) nach Anspruch 9 oder Anspruch 10,
**dadurch gekennzeichnet, dass** der Brandschutz (20) aus Gipsplatten gebildet ist, um eine Anordnung, die aus dem Vorratsbehälter (28), dem System zur Regelung der Pegel der nicht brennbaren Flüssigkeit (80) und der Anschlussleitung (46) gebildet ist, herum angeordnet ist und an der Stütztrennwand (43) befestigt ist.

**12.** Sicherheitsbehälter (2) nach einem der Ansprüche 1 bis 11,
**dadurch gekennzeichnet, dass** das System zur Regelung der Pegel der nicht brennbaren Flüssigkeit (80) enthält:

- einen ersten Regelungsraum (82), der mit dem Vorratsbehälter (28) unterhalb der freien Oberfläche der nicht brennbaren Flüssigkeit (26) verbunden ist und mit der Lagerzelle (4) oberhalb der freien Oberfläche der nicht brennbaren Flüssigkeit (26) verbunden ist, so dass er unter dem gleichen Druck wie die Lagerzelle (4) steht,
- einen zweiten Regelungsraum (84), der mit dem Vorratsbehälter (28) unterhalb der freien Oberfläche der nicht brennbaren Flüssigkeit (26) verbunden ist und mit dem Sicherheitsbehälter (2) oberhalb der freien Oberfläche der nicht brennbaren Flüssigkeit (26) verbunden ist, so dass er unter dem gleichen Druck wie der Sicherheitsbehälter (2) steht,
- ein erstes Schwimmerventil (140), das in dem ersten Regelungsraum (82) angeordnet und während des normalen Betriebs geschlossen ist, und
- ein zweites Schwimmerventil (142), das in dem zweiten Regelungsraum (84) angeordnet und während des normalen Betriebs geöffnet ist,

und dass der Vorratsbehälter (28) mit nicht brennbarer Flüssigkeit (26) versorgt wird, wenn beide Schwimmerventile (140, 142) gleichzeitig geöffnet sind.

**13.** Sicherheitsbehälter (2) nach Anspruch 12,
**dadurch gekennzeichnet, dass** der erste Regelungsraum (82) eine Entlüftungsöffnung (86) aufweist, die direkt mit der Anschlussleitung (46) verbunden ist, wodurch der erste Regelungsraum (82) unter dem gleichen Druck steht wie die Lagerzelle (4).

**14.** Sicherheitsbehälter (2) nach Anspruch 12 oder 13,
**dadurch gekennzeichnet, dass** der zweite Regelungsraum (84) eine Entlüftung (88) aufweist, die direkt mit dem Sicherheitsbehälter (2) verbunden ist, wodurch der zweite Regelungsraum (84) unter dem gleichen Druck wie der Sicherheitsbehälter (2) steht.

**15.** Sicherheitsbehälter (2) nach einem der Ansprüche 12 bis 14,
**dadurch gekennzeichnet, dass** das System zum Regeln der Pegel der nicht brennbaren Flüssigkeit (80) ferner ein Notventil (144) zur manuellen Ansteuerung des Systems enthält.

**16.** Sicherheitsbehälter (2) nach einem der Ansprüche 12 bis 15,
**dadurch gekennzeichnet, dass** jeder Regelungsraum (82, 84) einen Überlauf (112, 114) aufweist, der mit einem Siphon (108, 110) versehen ist, der die Ableitung der nicht brennbaren Flüssigkeit (26) in einen Rückgewinnungsbehälter (94) ermöglicht.

**17.** Sicherheitsbehälter (2) nach einem der Ansprüche 12 bis 16,
**dadurch gekennzeichnet, dass** er ferner einen Vorrat an nicht brennbarer Flüssigkeit (94), ein Füllrohr (118), das den Vorratsbehälter (28) aus dem Vorrat an nicht brennbarer Flüssigkeit (96) speist, und ein Abflussrohr (122) enthält.

**18.** Sicherheitsbehälter (2) nach einem der Ansprüche 1 bis 17,
**dadurch gekennzeichnet, dass** alle seine Bestandteile aus rostfreiem Stahl hergestellt sind.

**19.** Sicherheitsbehälter (2) nach einem der Ansprüche 1 bis 18,
**dadurch gekennzeichnet, dass** die in dem Vorratsbehälter (28) enthaltene nicht brennbare Flüssigkeit (26) Wasser ist.

**Claims**

**1.** Containment enclosure (2) including a storage cell (4) implanted in it and a device limitation (10) for limiting the ultimate consequences of a mass fire that is not brought under control in a storage cell (4), the limitation device (10) being arranged into the containment enclosure (2), outside the storage cell (4), and being connected to the storage cell (4) through a connection pipe (46), the device for limiting comprising:

- a closed tank (28) containing a non-flammable liquid (26) ;
- the connection pipe (46);
- a fire shield protection (20); and
- a non-flammable liquid level control system (80) ;

said tank (28) comprises:

- an upper wall (30), a lower wall (32) and lateral walls (34) having at one opening (36),
- separation elements (50), anchored by an upper end on said at least one opening (36) of said upper wall (30), without reaching said lower wall (32) of the tank (28), said separation elements (50) being immerged, in normal working state of the device, in the non-flammable liquid (26), said separation elements (50) defining an internal chamber (54) and at least one external chamber (52), the internal chamber (54) and said at least one external chamber (52) being in direct communication with said containment enclosure (2) via said at least one opening (36).

**2.** Containment enclosure (2) according to claim 1, **characterised in that** the limitation device (10, 11) is designed so as to satisfy the following relationship:

$$\frac{s}{S} = \frac{p\_adm}{p\_ech}$$

where:

- s is the surface of the internal chamber (54),
- S is the sum of the surfaces of the external chambers (52) and of the openings (36),
- p_adm is the triggering pressure for the intake of gases into the storage cell (4) from the containment enclosure (2) by the limitation device (10), and
- p_ech is the triggering pressure for the discharge of gases from the storage bin (4) to the containment enclosure (2) by the limitation device (10) .

**3.** Containment enclosure (2) according to claim 1 or 2, **characterised in that** said separation elements (50) are four in number for each opening (36) and each opening (36) has a rectangular outline.

**4.** Containment enclosure (2) according to any one of claims 1 to 3, **characterised in that** it comprises four external chambers (52), each of the external chambers (52) being in direct communication with the confinement enclosure by a respective opening .

**5.** Containment enclosure (2) according to any one of claims 1 to 4, **characterised in that** said separation elements (50) are fitted with wave breaker devices (56) formed by metal plates anchored to lower ends of the separation elements (50) which are orientated towards the inside of said at least one external chamber (52).

**6.** Containment enclosure (2) according to any one of claims 1 to 5, **characterised in that** the limitation device (10, 11) additionally comprises a bubble fractionation device (58) associated with each external chamber (52).

7. Containment enclosure (2) according to claim 6, **characterised in that** said at least one bubble fractionation device (58) is constituted by superimposed layers (60) of intermeshed wires, said layers (60) being separated from each other by holding grids (62).

8. Containment enclosure (2) according to claim 7, **characterised in that** the bubble fractionation devices (58) are anchored to the wave breaker devices (56) by means of spacers (68) interposed between an holding grid (62) of the bubble fractionation devices (58), said upper holding grid, and an holding grid (62), said lower holding grid, of the bubble fractionation devices (58) .

9. Containment enclosure (2) according to any one of claims 1 to 8, **characterised in that** the limitation device (10) is anchored to a support bulkhead (43) which is a leak tight bulkhead forming a constituent part of said storage cell (4).

10. Containment enclosure (2) according to claim 9, **characterised in that** said connection pipe (46) provides communication between the storage cell (4) and the internal chamber (54) by passing through the support bulkhead (43).

11. Containment enclosure (2) according to claim 9 or 10, **characterised in that** the fire shield protection (20) is formed of plaster panels, placed around a set formed by the tank (28), the non-flammable liquid level control system (80) and the connection pipe (46), and is anchored on the support bulkhead (43).

12. Containment enclosure (2) according to any one of claims 1 to 11, **characterised in that** the non-flammable liquid level control system (80) comprises:

   - a first control compartment (82), which communicates with the tank (28) underneath the free surface of the liquid (26) and which communicates with the storage cell (4) above the free surface of the liquid (26) so as to be at the same pressure as the storage cell (4),
   - a second control compartment (84), which communicates with the tank (28) underneath the free surface of the liquid (26) and which communicates with the containment enclosure (2) above the free surface of the liquid (26) so as to be at the same pressure as the containment enclosure (2),
   - a first float valve (140), placed in the first control compartment (82) and closed in normal operation, and
   - a second float valve (142), placed in the second control compartment (84) and open in normal operation,

   and **in that** said tank (28) is supplied with liquid when said two float valves (140, 142) are open simultaneously.

13. Containment enclosure (2) according to claim 12, **characterised in that** the first control compartment (82) comprises an aeration orifice (86) directly connected to the connection pipe (46), by means of which said first control compartment (82) is at the same pressure as said storage cell (4).

14. Containment enclosure (2) according to claim 12 or 13, **characterised in that** the second control compartment (84) comprises a vent (88) directly connected to the containment enclosure (2), by means of which said second control compartment (84) is at the same pressure as said containment enclosure (2).

15. Containment enclosure (2) according to any one of claims 12 to 14, **characterised in that** the non-flammable liquid level control system (80) further comprises an emergency valve (144) intended for manual operation of said system.

16. Containment enclosure (2) according to any one of claims 12 to 15, **characterised in that** each control compartment (82, 84) comprises an overflow (112, 114) fitted with a siphon (108, 110), allowing the liquid (26) to be discharged towards a recovery tank (94).

17. Containment enclosure (2) according to any one of claims 12 to 16, **characterised in that** it further comprises a reserve of non-inflammable liquid (94), a filler pipe (118) feeding the tank (28) from the non-inflammable liquid reserve (96), and a drain pipe (122) .

18. Containment enclosure (2) according to any one of claims 1 to 17, **characterised in that** all its constituent elements are made of stainless steel.

19. Containment enclosure (2) according to any one of claims 1 to 18, **characterised in that** the non-flammable liquid (26) contained in the tank (28) is water.

FIG. 1

FIG. 3

FIG. 2

FIG. 4

FIG. 5

FIG. 6

FIG. 7

FIG. 8

FIG. 9

FIG. 10

FIG. 11

FIG. 12

FIG. 13

FIG. 14

FIG. 15

**EP 1 827 609 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5395408 A
- US 4859405 A
- GB 526178 A
- EP 0714701 A
- GB 1165821 A
- US E26020 E
- US 5884709 A